# EUROPÄISCHE PATENTSCHRIFT

(11) **EP 3 014 138 B1**
(45) Veröffentlichungstag und Bekanntmachung des Hinweises auf die Patenterteilung: **01.11.2017**
(21) Anmeldenummer: 14733591.3
(22) Anmeldetag: 23.06.2014
(51) Int. Cl.: F16D 65/097, F16D 55/226

(54) **BREMSBELAGANORDNUNG FÜR EINE SCHEIBENBREMSE MIT EINER EINRICHTUNG ZUR GERÄUSCHREDUZIERUNG**
BRAKE LINING ASSEMBLY FOR A DISK BRAKE COMPRISING A NOISE-REDUCING DEVICE
SYSTÈME DE GARNITURE DE FREIN POUR UN FREIN À DISQUE COMPRENANT UN DISPOSITIF DE RÉDUCTION DE BRUIT

(30) Priorität: 28.06.2013 DE 102013010876
(43) Veröffentlichungstag der Anmeldung: 04.05.2016
(73) Patentinhaber: Lucas Automotive GmbH, 56070 Koblenz (DE)
(72) Erfinder: BECKER, Marco, 56651 Oberdürenbach (DE)
(74) Vertreter: Thum, Bernhard
(86) Internationale Anmeldenummer: PCT/EP2014/063100
(87) Internationale Veröffentlichungsnummer: WO 2014/206906

(56) Entgegenhaltungen:
- EP-A2- 1 447 585
- DE-A1- 3 333 670
- DE-A1-102011 112 247
- US-A- 3 638 765

## Beschreibung

Die Erfindung betrifft eine Bremsbelaganordnung für eine Fahrzeugbremse mit einem Reibbelag und einer Belagrückenplatte, die einen in ihrem seitlichen Randbereich angeordneten Aufnahmeabschnitt zur Aufnahme eines separaten, die Belagrückenplatte seitlich umfassenden Dämpfungselements aufweist. Eine gattungsgemäße Bremsbelaganordnung geht z.B. aus EP-A-1 447 585 hervor. Eine derartige Bremsbelaganordnung ist beispielweise aus DE 10 2006 052 178 A1 bekannt. Bei der darin beschriebenen Scheibenbremse umfasst ein Bremssattel eine axial drehbare Bremsscheibe, wobei in dem Bremssattel mindestens ein Paar Bremsbeläge axial verschiebbar angeordnet ist. Durch die Bremsung entstehende Umfangs- und Radialkräfte werden über die Bremsbeläge in den Bremssattel abgeleitet, da die Bremsbeläge in Umfangsrichtung über Anlageflächen und in Radialrichtung über Abstützflächen im Bremssattel gelagert sind. Insbesondere werden in Umfangs- bzw. Längsrichtung auf die Bremsbeläge wirkende Bremskräfte über an Führungsschächten ausgebildeten Halteranlageflächen in einen der Scheibenbremse zugehörigen Halter eingeleitet. Weitere Kräfte, beispielsweise Momenten- und Gewichtskräfte, die in Radialrichtung der Bremsscheibe wirken, sind über Halterabstützflächen in den Halter einleitbar. Zwischen den Abstützflächen und den Halterabstützflächen ist eine Lasche angeordnet, die dazu dient, die axiale Verschiebbarkeit des Bremsbelags in dem Führungsschacht zu erleichtern. Um einer Geräuschbildung entgegenzuwirken ist diese Lasche steif mit der Rückenplatte verbunden.

Im Allgemeinen sind die Außenmaße von Belagrückenplatten aus dem Stand der Technik bekannter Bremsbelaganordnungen in Längsrichtung, also in der Umfangsrichtung der Bremsscheibe, geringer als die Weite der Führung, in der sie an dem Bremssattel bzw. Bremsträger angeordnet sind. Dies hat zur Folge, dass die Bremsbelaganordnung gegenüber dem Bremsträger stets beabstandet ist und somit ein Funktionsspiel aufweist. Bei Einsatz in einem Fahrzeug bewirkt dies insbesondere beim Wechsel zwischen Vorwärtsfahrt und Rückwärtsfahrt unter gleichzeitigem Bremsen das Entstehen eines störenden Anschlaggeräusches. Dieses Anschlaggeräusch entsteht beim Auftreffen der Bremsbelaganordnung auf den die Bremsbelaganordnung tragenden Bremsträger.

Es ist dementsprechend eine Aufgabe der vorliegenden Erfindung, eine Bremsbelaganordnung der eingangs bezeichneten Art bereitzustellen, in der ein Anschlaggeräusch wirkungsvoll verringert oder vermieden wird, ohne dass der Reibbelag zu verklemmen droht.

Diese Aufgabe wird durch eine Bremsbelaganordnung gemäß Anspruch 1 gelöst. In einer Ausführungsform der Erfindung umfasst der Aufnahmeabschnitt eine erste Vertiefung auf einer ersten Längsseite der Belagrückenplatte. Die Vertiefung weist dabei vorzugsweise einen flachen Bereich auf. Alternativ oder zusätzlich dazu kann die Vertiefung einen mindestens abschnittsweise bezüglich einer Mittenebene der Belagrückenplatte schrägen Randbereich mit einer Schräge aufweisen. Die Mittenebene der Belagrückenplatte verläuft in diesem Kontext im Wesentlichen parallel zu einer Oberfläche der Belagrückenplatte, beispielsweise zu einer Grenzfläche zwischen der Belagrückenplatte und dem Reibbelag.

Erfindungsgemäß ist es vorgesehen, dass der Aufnahmeabschnitt der Belagrückenplatte ferner eine zweite Vertiefung aufweist, die auf der ersten Längsseite der Belagrückenplatte beabstandet gegenüber der ersten Vertiefung angeordnet ist. Insbesondere kann dabei die zweite Vertiefung in einem geringeren Abstand zu der Mitte der Belagrückenplatte angeordnet sein als die erste Vertiefung. Dies erlaubt es beispielsweise, bestimmte Freiheitsgrade für die Bewegung des Dämpfungselements vorzugeben.

In einer Ausführungsform der Erfindung weist der Aufnahmeabschnitt der Belagrückenplatte ferner eine dritte und eine vierte Vertiefung auf, wobei die dritte und die vierte Vertiefung auf einer der ersten Längsseite der Belagrückenplatte entgegengesetzten zweiten Längsseite der Belagrückenplatte angeordnet ist. Dabei kann die erste Vertiefung wie die dritte Vertiefung und die vierte Vertiefung wie die zweite Vertiefung ausgebildet sein. Vorzugsweise sind die erste und die dritte Vertiefung sowie die zweite und die vierte Vertiefung jeweils zueinander symmetrisch bezüglich einer Mittenebene der Belagrückenplatte an der Belagrückenplatte angeordnet. Dies gewährleistet beispielsweise eine einfache Herstellung der Belagrückenplatte. Das Dämpfungselement ist C- oder U-förmig ausgestaltet und umklammert die Belagrückenplatte derart, dass die beiden Klemmschenkel der Belagrückenplatte auf zueinander entgegengesetzten Seiten der Belagrückenplatte angeordnet sind. Die beiden Schenkel des C- oder U-förmig ausgestalteten Dämpfungselements sind dabei über den Kontaktabschnitt verbunden. Vorteilhafterweise sind die beiden Schenkel sowie der Kontaktabschnitt flach ausgebildet. Sie können jedoch auch stangenförmig ausgebildet sein. Insbesondere kann das Dämpfungselement bezüglich mindestens einer seiner Mittenebenen symmetrisch ausgestaltet sein. Es ist vorzugsweise bezüglich einer seiner Mittenebenen symmetrisch ausgestaltet. Das Dämpfungselement weist an jedem der beiden Klemmschenkel einen Fixierfortsatz auf. Dieser Fixierfortsatz weist an seinem distalen Ende eine vorbestimmte Materialstärke auf, wobei die Fixierfortsätze dazu eingerichtet sind, um sich mit der zweiten und der vierten Vertiefung in Eingriff zu befinden. Dabei kann die Länge der zweiten und der vierten Vertiefung entlang einer Längsrichtung der Belagrückenplatte jeweils größer sein als die vorbestimmte Materialstärke des Fixierfortsatzes. Das Dämpfungselement ist somit anhand des Fixierfortsatzes verliersicher an der Belagrückenplatte befestigt und gleichzeitig in einer Längsrichtung der Belagrückenplatte verschiebbar.

Erfindungsgemäß kann ferner vorgesehen sein, dass das Dämpfungselement an einem oder alternativ an beiden der Klemmschenkel jeweils mindestens einen gegenüber dem Klemmschenkel abgewinkelten Federfortsatz aufweist. Es ist vorgesehen, dass der Winkel zwischen dem Federfortsatz und dem Klemmschenkel jeweils flach ist. Beispielsweise kann dieser Winkel zwischen 5 und 15 Grad liegen. Alternativ ist aber auch jeder andere Winkelwert kleiner als 180 Grad denkbar. Die Klemmschenkel können darüber hinaus jeweils eine Aussparung aufweisen, die dazu eingerichtet ist, die Federfortsätze darin aufzunehmen. In diesem Fall überschreiten die Außenmaße der Federfortsätze die Innenmaße der Aussparung nicht, so dass die Federfortsätze in die Aussparung hinein passen. Einer oder mehrere Federfortsätze können darüber hinaus elastisch ausgebildet sein.

Vorzugsweise sind die Federfortsätze dazu eingerichtet, um entlang einer Schräge im schrägen Randbereich der ersten Vertiefungen zu gleiten. Dadurch wird ein der Belagrückenplatte zugeführter Impuls abgefedert. Während des Gleitens bzw. des Abfederns ändert sich der Winkel zwischen den Federfortsätzen und den Klemmschenkeln. Er wird insbesondere verkleinert. Im Fall elastischen Federns entspricht der Winkel zwischen den Federfortsätzen und den Klemmschenkeln nach dem Federvorgang wieder dem ursprünglichen Winkel.

Zur vereinfachten Herstellung der Erfindung ist vorgesehen, dass das Dämpfungselement werkstoffeinstückig ausgebildet ist. Dies ist insbesondere dann von Vorteil, wenn das Dämpfungselement U-förmig und symmetrisch ausgestaltet ist. Dazu kann das Dämpfungselement als Stanz-Biegeteil beispielsweise aus einem Stück Blech, zum Beispiel einen Federstahl, der vorgegebenen Materialstärke ausgebildet sein.

Vorzugsweise ist eine Seitenfläche der Belagrückenplatte gegenüber einem die beiden Klemmschenkel des U-förmigen Dämpfungselements verbindenden Verbindungsabschnitt um mindestens 0,1mm beabstandet. Dies erlaubt es, ein Mindestmaß an Federweg bzw. Dämpfungsweg für das Dämpfungselement sicherzustellen. In einer alternativen Ausführungsform ist der Mindestabstand in Abhängigkeit von dem Gewicht oder anderen Bauparametern der Bremsbelaganordnung vorbestimmt.

Die Erfindung betrifft ferner eine Scheibenbremsanordnung für ein Fahrzeugsystem mit einer Bremsscheibe und einer Bremsbelaganordnung der vorstehend beschriebenen Art, wobei die Bremsbelaganordnung relativ zur Bremsscheibe bewegbar angeordnet ist, um auf die Bremsscheibe mittels eines Reibbelags einzuwirken. Wie vorstehend bereits detailliert erläutert, ist bei dieser Bremsbelaganordnung vorgesehen, dass das Dämpfungselement einen Kontaktabschnitt zum Kontaktieren eines mit dem Kontaktabschnitt korrespondierenden Abschnitts eines Bremsträgers aufweist und das Dämpfungselement derart eingerichtet ist, dass es in Folge eines Kontaktierens zumindest abschnittsweise deformierbar oder/und verlagerbar ist.

Die Erfindung wird im Folgenden beispielhaft anhand der beiliegenden Figuren erläutert. Es stellen dar:
- Fig. 1: eine perspektivische Gesamtansicht einer erfindungsgemäßen Bremsbelaganordnung in einer Rückansicht;
- Fig. 2: eine perspektivische Detailansicht der Bremsbelaganordnung aus Fig. 1, wobei das Dämpfungselement gegenüber der Belagrückenplatte separiert dargestellt ist;
- Fig. 3: eine perspektivische Detailansicht des erfindungsgemäßen Dämpfungselements;
- Fig. 4: eine Schnittansicht eines Ausschnitts der in Fig.1 gezeigten Bremsbelaganordnung mit in Eingriff befindlichem Dämpfungselement;
- Fig. 5: eine Draufsicht auf den in Fig. 4 gezeigten Ausschnitt der Bremsbelaganordnung;
- Fig. 6: eine perspektivische Gesamtansicht einer erfindungsgemäßen Scheibenbremsanordnung;
- Fig. 7: eine perspektivische Detailansicht der Scheibenbremsanordnung aus Fig. 6.

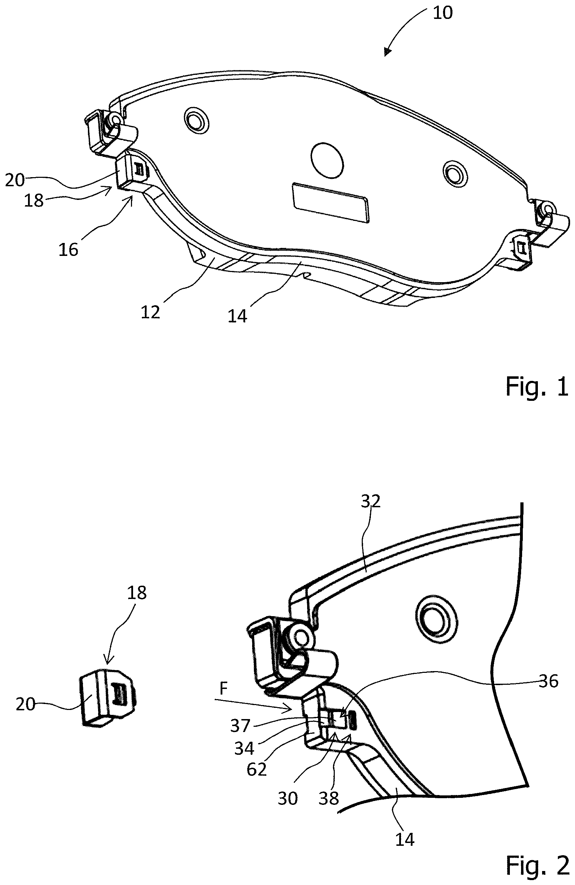

In Fig. 1 ist eine perspektivische Gesamtansicht der Bremsbelaganordnung 10 gemäß der vorliegenden Erfindung gezeigt. Die Bremsbelaganordnung 10 umfasst einen Reibbelag 12 und eine Belagrückenplatte 14, die einen in ihrem seitlichen Randbereich angeordneten Aufnahmeabschnitt 16 zur Aufnahme eines separaten, die Belagrückenplatte 14 seitlich umfassenden Dämpfungselements 18 aufweist. Das Dämpfungselement 18 weist dabei einen Kontaktabschnitt 20 zum Kontaktieren eines mit dem Kontaktabschnitt 20 korrespondierenden Abschnitts 22 eines Bremsträgers 24 auf.

Der Reibbelag 12 ist dazu eingerichtet, bei einer Betätigung einer die Bremsbelaganordnung umfassenden Bremse an eine Bremsscheibe gedrückt zu werden und dabei eine Reibkraft auf eine Bremsscheibe (nicht gezeigt) auszuüben. Bei einem Rotationsrichtungswechsel der Bremsscheibe bewegt sich die Bremsbelaganordnung somit aufgrund des oben beschriebenen inhärent vorliegenden Funktionsspiels gegenüber dem Bremsträger 24. Herkömmliche Bremsbelaganordnungen drohen dadurch an den Bremsträger 24 anzuschlagen wodurch ein deutlich wahrnehmbares und als unangenehm empfundenes Anschlaggeräusch erzeugt wird.

Indem das Dämpfungselement 18 abschnittsweise deformierbar und verlagerbar ist (hier insbesondere gegenüber dem Bremsträger 24 und der Belagrückenplatte 14), trägt es zur Vermeidung solcher Anschlaggeräusche bei. Im Kontaktfall, d.h. ab dem Kontaktieren, wirkt eine Kraft entlang der Richtung F auf das Dämpfungselement. Das Dämpfungselement 18 wird somit bei einem Kontakt seitwärts im Wesentlichen entlang der Richtung F in Längsrichtung der Belagrückenplatte 14 auf den Aufnahmeabschnitt 16 (weiter) aufgeschoben. Dadurch kann das Dämpfungselement 18 einen bei dem Kontaktieren bzw. Anstoßen des Dämpfungselements 18 an den korrespondierenden Abschnitt 22 des Bremsträgers abfedern bzw. dämpfen. Im Regelfall wird es jedoch elastisch deformiert und wirkt dabei als eine zwischen der Belagrückenplatte und dem Bremsträger 24 angeordnete Feder.

Der Aufnahmeabschnitt 16 weist eine erste Vertiefung 30 auf einer ersten Längsseite 32 der Belagrückenplatte 14 auf, wobei die erste Vertiefung 30 einen flachen Bereich 34 und einen bezüglich einer Mittenebene A der Belagrückenplatte 14 schrägen Randbereich 36 mit einer ersten Schräge 37 aufweist. Der Aufnahmeabschnitt 16 der Belagrückenplatte 14 weist ferner eine zweite Vertiefung 38 auf, die auf der ersten Längsseite 32 der Belagrückenplatte 14 beabstandet gegenüber der ersten Vertiefung 30 angeordnet ist. Die zweite Vertiefung 38 ist in einem geringeren Abstand zu der Mitte der Belagrückenplatte angeordnet als die erste Vertiefung 30. Mit anderen Worten ist die zweite Vertiefung 38 weiter entfernt gegenüber dem einer Seitenfläche 62 der Belagrückenplatte 14 zugewandten seitlichen Rand des Aufnahmeabschnitts 16 angeordnet als die erste Vertiefung 30.

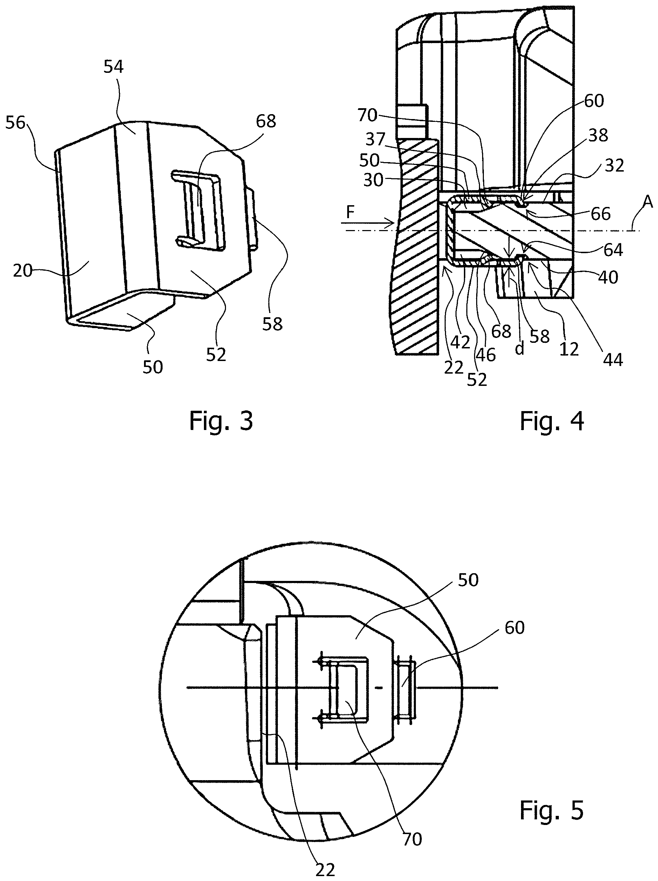

Wie in den Figuren 3 bis 5 detailliert dargestellt ist, weist der Aufnahmeabschnitt 16 der Belagrückenplatte 14 darüber hinaus eine dritte Vertiefung 42 und eine vierte Vertiefung 44 auf. Die dritte und die vierte Vertiefung 42, 44 sind auf einer der ersten Längsseite 32 der Belagrückenplatte 14 entgegengesetzten zweiten Längsseite 40 der Belagrückenplatte 14 angeordnet und spiegelbildlich dazu, d.h. flächensymmetrisch bezüglich der Mittenebene A der Belagrückenplatte 14 ausgestaltet. Mit anderen Worten sind die erste und die dritte Vertiefung 30, 42 sowie die zweite und die vierte Vertiefung 38, 44 jeweils zueinander symmetrisch bezüglich einer Mittenebene A der Belagrückenplatte 14 an der Belagrückenplatte 14 angeordnet und ausgestaltet, wobei die dritte Vertiefung 42 eine zweite Schräge 46 aufweist. Die erste und die zweite Schräge 37, 46 sind dabei bezüglich der Mittenebene A der Belagrückenplatte 14 gegensätzlich ausgebildet bzw. ausgerichtet. Auf der zweiten Längsseite 40 ist auch der Reibbelag 12 an der Belagrückenplatte 14 angeordnet.

Das in dieser Ausführungsform vorgesehene Dämpfungselement 18 ist U-förmig ausgestaltet. Es ist aus einem metallischen Blech einer vorbestimmten Materialstärke d (hier beispielsweise ein Federstahl, ca. 0,6mm stark) hergestellt. Das U-förmige Dämpfungselement 18 weist zwei Klemmschenkel 50, 52 auf, die über den Kontaktabschnitt 20 miteinander verbunden sind. Der Kontaktabschnitt 20 sowie die beiden Klemmschenkel 50, 52 sind flach ausgebildet und die Kanten 54, 56 zwischen dem Kontaktabschnitt 20 und den beiden Klemmschenkeln 50, 52 sind abgerundet.

Das U-förmige Dämpfungselement 18 umklammert die Belagrückenplatte 14 derart, dass die beiden Klemmschenkel 50, 52 der Belagrückenplatte 14 auf zueinander entgegengesetzten Seiten der Belagrückenplatte 14 passend zu den Vertiefungen 30, 38, 42, 44 symmetrisch bezüglich der Mittenebene A angeordnet sind (vgl. Fign. 1, 3 und 4). Wie insbesondere in Fig. 4 dargestellt, weist das Dämpfungselement 18 an jedem seiner beiden Klemmschenkel 50, 52 einen Fixier- oder Einrastfortsatz 58, 60 auf. Diese Fixierfortsätze 58, 60 sind dazu eingerichtet, um in die zweite Vertiefung 38 und in die vierte Vertiefung 44 einzurasten, d.h. sich mit der zweiten und der vierten Vertiefung 38, 44 in Eingriff zu befinden.

Die erste und die dritte Vertiefung 30, 42 schließt bündig mit der Seitenfläche 62 der Belagrückenplatte 14 ab (vgl. Fig. 4), sodass keine Stufe zwischen der Seitenfläche 62 des Aufnahmeabschnitts 16 und der jeweiligen Vertiefung vorliegt und das Dämpfungselement 18 somit seitlich unter geringem Kraftaufwand auf den Aufnahmeabschnitt 16 aufgeschoben werden kann. Dabei sind die flachen Abschnitte der ersten und der dritten Vertiefung 30, 42 jeweils zwischen der ersten bzw. der zweiten Schräge 37, 46 und der Seitenfläche 62 angeordnet.

Die Fixierfortsätze 58, 60 sind aus demselben Blechstück hergestellt wie der Rest des Dämpfungselements 18 und weisen somit an allen distalen Enden jeweils dieselbe vorbestimmte Materialstärke d auf. Wie in Fig. 4 gezeigt, ist die Länge der zweiten und der vierten Vertiefung 38, 44 entlang einer Längsrichtung der Belagrückenplatte 14 jeweils größer als diese Materialstärke d. Somit ist die Feder unverlierbar an der Belagrückenplatte 14 bzw. dem Aufnahmeabschnitt 16 gehalten und gleichzeitig in Längsrichtung (parallel zur Mittenebene A) der Belagrückenplatte 14 verlagerbar bzw. verschiebbar.

Darüber hinaus weist das Dämpfungselement 18 an jedem seiner Klemmschenkel 50, 52 jeweils mindestens einen gegenüber demjenigen Klemmschenkel abgewinkelten Federfortsatz 68, 70 auf. Dies ist insbesondere in den Fign. 3 und 4 deutlich erkennbar. Die Federfortsätze 68, 70 sind dazu eingerichtet, um entlang den Schrägen 37, 46 der ersten Vertiefungen 30, 42 zu gleiten. Dadurch wird insbesondere ein der Belagrückenplatte 14 in der Richtung F zugeführter Impuls wirkungsvoll abgefedert. Während des Abfederns werden die beiden Klemmschenkel des Dämpfungselements gegenüber dem Aufnahmeabschnitt verlagert/verschoben. Die Federkraft ist hier linear. Anhand von Materialparametern und/oder Geometrieparametern kann auch eine andere Abhängigkeit zwischen der Federkraft von der bewirkten Verschiebung, beispielsweise eine exponentielle Zunahme der Federkraft mit der Verschiebung eingestellt sein.

Wie in den Fign. 4 und 5 dargestellt, ist die Seitenfläche der Belagrückenplatte 14 gegenüber dem Kontaktabschnitt 20 des Dämpfungselements 18 beabstandet. Im gezeigten Ausführungsbeispiel beträgt dieser Abstand ca. 1 mm. Ebenso ist der Kontaktabschnitt 20, gegenüber dem korrespondierenden Abschnitt 22 des Bremsträgers 24 beabstandet.

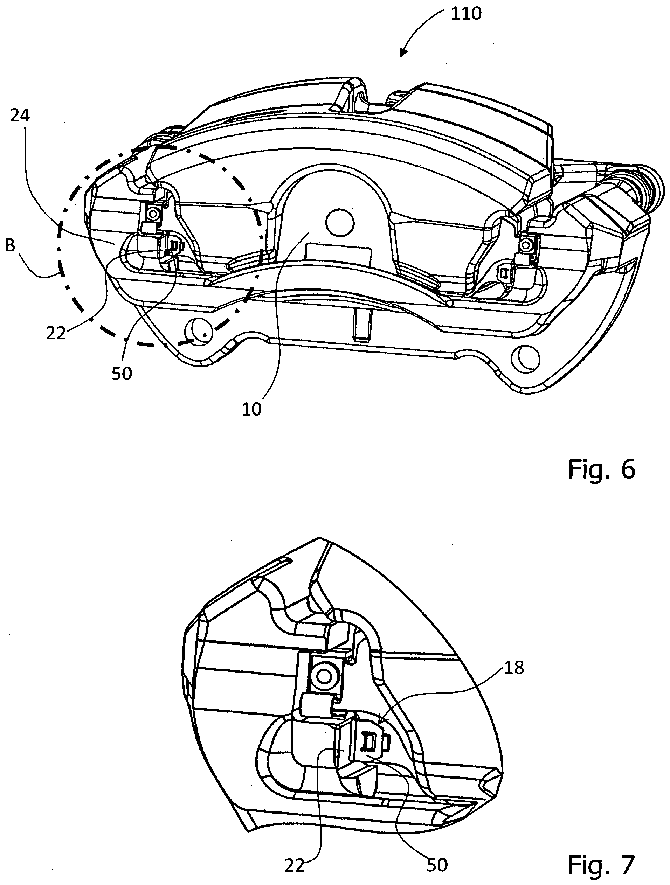

In den Figuren 6 und 7 ist eine Scheibenbremsanordnung 110 für ein Fahrzeugsystem dargestellt. Dabei zeigt Fig. 6 eine Gesamtansicht und Fig. 7 eine Detailansicht des in Fig. 6 markierten Bereichs B. Diese Scheibenbremsvorrichtung 110 umfasst eine Bremsscheibe (nicht gezeigt) und eine Bremsbelaganordnung 10 der vorstehend beschriebenen Art, wobei die Bremsbelaganordnung 10 relativ zur Bremsscheibe bewegbar angeordnet ist, um auf die Bremsscheibe mittels eines Reibbelags 12 einzuwirken. Die hierfür vorgesehene Bremsbelaganordnung 10 weist alle der vorstehend beschriebenen Merkmale auf. Insbesondere ist bei dieser Bremsbelaganordnung 10 vorgesehen, dass das Dämpfungselement 18 einen Kontaktabschnitt 20 zum Kontaktieren eines mit dem Kontaktabschnitt 20 korrespondierenden Abschnitts 22 eines Bremsträgers 24 aufweist und das Dämpfungselement 18 derart eingerichtet ist, dass es in Folge eines Kontaktierens zumindest abschnittsweise deformierbar oder/und verlagerbar ist.

## Patentansprüche

1. Bremsbelaganordnung für eine Fahrzeugbremse mit
- einem Reibbelag (12) und
- einer Belagrückenplatte (14), die einen in ihrem seitlichen Randbereich angeordneten Aufnahmeabschnitt (16) zur Aufnahme eines separaten, die Belagrückenplatte (14) seitlich umfassenden Dämpfungselements (18) aufweist,
wobei das Dämpfungselement (18) einen Kontaktabschnitt (20) zum Kontaktieren eines mit dem Kontaktabschnitt (20) korrespondierenden Abschnitts (22) eines Bremsträgers (24) aufweist und das Dämpfungselement (18) derart eingerichtet ist, dass es in Folge eines Kontaktierens zumindest abschnittsweise deformierbar oder/und verlagerbar ist,
wobei das Dämpfungselement (18) C- oder U-förmig ausgestaltet ist und zwei Klemmschenkel (50, 52) aufweist, die über den Kontaktabschnitt (20) verbunden sind, wobei das Dämpfungselement die Belagrückenplatte (14) derart umklammert, dass die beiden Klemmschenkel (50, 52) auf zueinander entgegengesetzten Seiten der Belagrückenplatte (14) angeordnet sind,
**dadurch gekennzeichnet, dass** das Dämpfungselement (18) an jedem der Klemmschenkel (50, 52) jeweils mindestens einen gegenüber dem Klemmschenkel abgewinkelten Federfortsatz (68, 70) aufweist.

2. Bremsbelaganordnung nach Anspruch 1,
**dadurch gekennzeichnet, dass** der Aufnahmeabschnitt (16) eine erste Vertiefung (30) auf einer ersten Längsseite (32) der Belagrückenplatte (14) umfasst, wobei die erste Vertiefung (30) einen flachen Bereich (34) und/oder einen mindestens abschnittsweise bezüglich einer Mittenebene A der Belagrückenplatte (14) schrägen Randbereich (36) mit einer Schräge (37) aufweist.

3. Bremsbelaganordnung nach Anspruch 2,
**dadurch gekennzeichnet, dass** der Aufnahmeabschnitt (16) der Belagrückenplatte (14) ferner eine zweite Vertiefung (38) aufweist, die auf der ersten Längsseite (32) der Belagrückenplatte (14) beabstandet gegenüber der ersten Vertiefung (30) angeordnet ist, wobei die zweite Vertiefung (38) in einem geringeren Abstand zu der Mitte der Belagrückenplatte (14) angeordnet ist als die erste Vertiefung (30).

4. Bremsbelaganordnung nach Anspruch 3,
**dadurch gekennzeichnet, dass** der Aufnahmeabschnitt (16) der Belagrückenplatte (14) ferner eine dritte und eine vierte Vertiefung (42, 44) aufweist, die auf einer der ersten Längsseite (32) der Belagrückenplatte (14) entgegengesetzten zweiten Längsseite der Belagrückenplatte (14) angeordnet sind, wobei die dritte Vertiefung (42) wie die erste Vertiefung (30) und die vierte Vertiefung (44) wie die zweite Vertiefung (38) ausgebildet ist.

5. Bremsbelaganordnung nach Anspruch 4,
**dadurch gekennzeichnet, dass** das Dämpfungselement (18) an jedem der beiden Klemmschenkel (50, 52) einen Fixierfortsatz (58, 60) aufweist, der an seinem distalen Ende (64, 66) eine vorbestimmte Materialstärke (d) aufweist, wobei die Fixierfortsätze (58, 60) dazu eingerichtet sind, um sich mit der zweiten und der vierten Vertiefung (40, 44) in Eingriff zu befinden, wobei die Länge der zweiten und der vierten Vertiefung (40, 44) entlang einer Längsrichtung der Belagrückenplatte (14) jeweils größer ist als die vorbestimmte Materialstärke (d) des jeweiligen Fixierfortsatzes (58, 60).

6. Bremsbelaganordnung nach Anspruch 4 oder 5,
**dadurch gekennzeichnet, dass** die Federfortsätze (68, 70) dazu eingerichtet sind, jeweils entlang einer Schräge (37, 46) im jeweils schrägen Randbereich der ersten und der dritten Vertiefung (30, 42) zu gleiten, um einen der Belagrückenplatte (14) zugeführten Impuls abzufedern.

7. Bremsbelaganordnung nach einem der vorhergehenden Ansprüche,
**dadurch gekennzeichnet, dass** das Dämpfungselement (18) werkstoffeinstückig ausgebildet ist und eine Aussparung an jedem der Klemmschenkel (50, 52) im Bereich des Federfortsatzes (58, 60) aufweist.

8. Bremsbelaganordnung nach einem der vorhergehenden Ansprüche,
**dadurch gekennzeichnet, dass** eine Seitenfläche (62) der Belagrückenplatte (14) gegenüber dem Kontaktabschnitt (20) um mindestens 0,1mm beabstandet ist.

9. Scheibenbremsanordnung (110) für ein Fahrzeugsystem mit einer Bremsscheibe und einer Bremsbelaganordnung (10) nach einem der vorangehenden Ansprüche, wobei die Bremsbelaganordnung (10) relativ zur Bremsscheibe bewegbar angeordnet ist, um auf die Bremsscheibe mittels eines Reibbelags (12) einzuwirken.

## Claims

1. Brake pad assembly for a vehicle brake with
- a friction lining (12) and
- a pad backing plate (14), having a receiving portion (16) arranged in its lateral edge region for receiving a separate damping element (18), which laterally grasps the pad backing plate (14),
the damping element (18) having a contact portion (20) for contacting a portion (22) of a brake carrier (24) corresponding with the contact portion, and the damping element (18) being adapted to be deformable or/and displaceable at least in sections upon a contacting,
the damping element (18) being of C- or U-shaped configuration and having two clamping limbs (50, 52) which are connected via the contact portion (20), the damping element clasping the pad backing plate (14) in such a manner that the two clamping limbs (50, 52) are arranged on mutually opposite sides of the pad backing plate (14),
**characterized in that** the damping element (18) has, on each of the clamping limbs (50, 52), respectively at least one spring projection (68, 70) angled off with respect to the clamping limb.

2. Brake pad assembly according to Claim 1,
**characterized in that** the receiving portion (16) comprises a first recess (30) on a first longitudinal side (32) of the pad backing plate (14), the first recess (30) having a flat region (34) and/or an edge region (36), at least in sections sloping with respect to a centre plane A of the pad backing plate (14), with a slope (37).

3. Brake pad assembly according to Claim 2,
**characterized in that** the receiving portion (16) of the pad backing plate (14) further has a second recess (38) which is arranged on the first longitudinal side (32) of the pad backing plate (14) in a manner spaced apart from the first recess (30), the second recess (38) being arranged at a shorter distance from the centre of the pad backing plate (14) than the first recess (30).

4. Brake pad assembly according to Claim 3,
**characterized in that** the receiving portion (16) of the pad backing plate (14) further has a third and a fourth recess (42, 44) which are arranged on a second longitudinal side of the pad backing plate (14) opposite the first longitudinal side (32) of the pad backing plate (14), the third recess (42) being formed like the first recess (30) and the fourth recess (44) being formed like the second recess (38).

5. Brake pad assembly according to Claim 4,
**characterized in that** the damping element (18) has on each of the two clamping limbs (50, 52) a fixing projection (58, 60) which at its distal end (64, 66) has a predetermined material thickness (d), the fixing projections (58, 60) being adapted to be in engagement with the second and the fourth recess (40, 44), the length of the second and the fourth recess (40, 44) along a longitudinal direction of the pad backing plate (14) being respectively greater than the predetermined material thickness (d) of the respective fixing projection (58, 60).

6. Brake pad assembly according to Claim 4 or 5,
**characterized in that** the spring projections (68, 70) are adapted to slide respectively along a slope (37, 46) in the respectively sloping edge region of the first and of the third recess (30, 42), in order to spring an impulse supplied to the pad backing plate (14).

7. Brake pad assembly according to one of the preceding claims,
**characterized in that** the damping element (18) is formed materially integrally and has a cutout on each of the clamping limbs (50, 52) in the region of the spring projection (58, 60).

8. Brake pad assembly according to one of the preceding claims,
**characterized in that** a lateral surface (62) of the pad backing plate (14) is spaced apart from the contact portion (20) by at least 0.1 mm.

9. Disc brake assembly (110) for a vehicle system with a brake disc and a brake pad assembly (10) according to one of the preceding claims, the brake pad assembly being (10) arranged movably relative to the brake disc, in order to act on the brake disc by means of a friction lining (12).

## Revendications

1. Ensemble garniture de frein pour frein de véhicule, comportant
- une garniture de friction (12) et
- une plaquette porte-garniture (14) comprenant une partie de réception (16) disposée dans sa zone de bordure latérale et destinée à recevoir un élément d'amortissement (18) distinct enserrant latéralement la plaque porte-garniture (14), ledit élément d'amortissement (18) présentant une partie de contact (20) destinée à être mise en contact avec une partie (22) d'un support de frein correspondant à la partie de contact (20) et l'élément d'amortissement (18) étant conçu de sorte à pouvoir être au moins partiellement déformé et/ou déplacé à la suite d'une mise en contact,
l'élément d'amortissement (18) étant configuré en C ou en U et comprenant deux branches de serrage (50, 52) reliées par la partie de contact (20), l'élément d'amortissement enserrant la plaquette porte-garniture (14) de telle sorte que les deux branches de serrage (50, 52) sont disposées sur des côtés de la plaquette porte-garniture (14) opposés l'un à l'autre,
**caractérisé en ce que** l'élément d'amortissement (18) comprend sur chacune des branches de serrage (50, 52) au moins un prolongement élastique (68, 70) coudé par rapport à la branche de serrage.

2. Ensemble garniture de frein selon la revendication 1,
**caractérisé en ce que** la partie de réception (16) comprend un premier renfoncement (30) sur un premier grand côté (32) de la plaquette porte-garniture (14), le premier renfoncement (30) présentant une zone plate (34) et/ou une zone de bordure (36) avec un chanfrein (37), inclinée au moins sur certaines parties par rapport à un plan médian A de la plaquette porte-garniture (14).

3. Ensemble garniture de frein selon la revendication 2,
**caractérisé en ce que** la partie de réception (16) de la plaquette porte-garniture (14) présente en outre un deuxième renfoncement (38) qui est disposé sur le premier grand côté (32) de la plaquette porte-garniture (14) à une certaine distance du premier renfoncement (30), le deuxième renfoncement (38) étant disposé à une plus faible distance du milieu de la plaquette porte-garniture (14) que le premier renfoncement (30).

4. Ensemble garniture de frein selon la revendication 3,
**caractérisé en ce que** la partie de réception (16) de la plaquette porte-garniture (14) comprend en outre un troisième et un quatrième renfoncement (42, 44) disposés sur un deuxième grand côté de la plaquette porte-garniture (14) opposé au premier grand côté (32) de la plaquette porte-garniture (14), le troisième renfoncement (42) étant configuré comme le premier renfoncement (30) et le quatrième renfoncement (44) étant configuré comme le deuxième renfoncement (38).

5. Ensemble garniture de frein selon la revendication 4,
**caractérisé en ce que** l'élément d'amortissement (18) comprend sur chacune des deux branches de serrage (50, 52) un prolongement de verrouillage (58, 60) ayant une épaisseur de matériau (d) prédéterminée à son extrémité distale (64, 66), les prolongements de verrouillage (58, 60) étant conçus pour se trouver en prise avec les deuxième et quatrième renfoncements (40, 44), la longueur du deuxième et du quatrième renfoncement (40, 44) suivant une direction longitudinale de la plaquette porte-garniture (14) étant respectivement plus grande que l'épaisseur de matériau (d) prédéterminée du prolongement de verrouillage (58, 60) respectif.

6. Ensemble garniture de frein selon la revendication 4 ou 5,
**caractérisé en ce que** les prolongements élastiques (68, 70) sont conçus pour glisser chacun le long d'un chanfrein (37, 46) dans la zone de bordure inclinée respective du premier et du troisième renfoncement (30, 42), pour amortir une impulsion fournie à la plaquette porte-garniture (14).

7. Ensemble garniture de frein selon l'une des revendications précédentes, **caractérisé en ce que** l'élément d'amortissement (18) est réalisé venu de matière en une seule pièce et comprend un évidement sur chacune des branches de serrage (50, 52) dans la zone du prolongement élastique (58, 60).

8. Ensemble garniture de frein selon l'une des revendications précédentes,
**caractérisé en ce qu'**une surface latérale (62) de la plaquette porte-garniture (14) est espacée d'au moins 0,1 mm de la partie de contact (20).

9. Ensemble frein à disque (110) pour un système de véhicule comprenant un disque de frein et un ensemble garniture de frein (10) selon l'une des revendications précédentes, dans lequel l'ensemble garniture de frein (10) est disposé mobile par rapport au disque de frein pour agir sur le disque de frein au moyen d'une garniture de friction (12).
